**Europäisches Patentamt**

**European Patent Office**

**Office européen des brevets**

(19)

(11)  **EP 0 972 449 A1**

(12)  **EUROPÄISCHE PATENTANMELDUNG**

(43) Veröffentlichungstag:
    **19.01.2000   Patentblatt 2000/03**

(51) Int Cl.⁷: $A01N\ 65/00$

(21) Anmeldenummer: **99202340.8**

(22) Anmeldetag: **16.07.1999**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **17.07.1998  DE 19832239**

(71) Anmelder:
    • **Noack, Udo, Dr.**
      **31157 Sarstedt (DE)**
    • **Blei, Hans-Peter**
      **37581 Bad Gandersheim (DE)**

(72) Erfinder:
    • **Noack, Udo, Dr.**
      **31157 Sarstedt (DE)**
    • **Blei, Hans-Peter**
      **37581 Bad Gandersheim (DE)**

(74) Vertreter: **Stilkenböhmer, Uwe Michael et al
    Patentanwaltskontor,
    Dr. Eikenberg,
    Schackstrasse 1
    30175 Hannover (DE)**

(54)  **Verwendung von Dämpfungswasser**

(57)     Dämpfungswasser, wie es in der holzverarbeitenden Industrie beim Dämpfen von Hölzern anfällt, wurde bislang als problematisches Abfallprodukt angesehen. Es sollte ein Weg gefunden werden, die aus der Behandlung in Kläranlagen resultierenden Kosten einzusparen oder zumindest zu verringern.

Erfindungsgemäß wird Dämpfungswasser als Mittel zur Verminderung oder Verhinderung des Algenwachstums eingesetzt. Es kann sowohl als Algizid als auch als Mittel zur Fällung oder Ausflockung von im wässrigen Medium schwebenden Algen, Trübstoffen und/oder Bakterien Verwendung finden. Die Verwendung aufkonzentrierter oder gefriergetrockneter Dämpfungswässer ist möglich und in manchen Fällen sinnvoll.

EP 0 972 449 A1

**Beschreibung**

Die Erfindung betrifft Dämpfungswasser, wie es in der holzverarbeitenden Industrie beim Dämpfen von Hölzern (beim Holzdämpfen) anfällt, und insbesondere betrifft die Erfindung Dämpfungswasser, das beim Dämpfen von Schnittholz in einer Dämpfkammer anfällt. Der Begriff "Dämpfen" umfaßt dabei jegliche Behandlung von Hölzern mit Wasserdampf zur Veränderung der Holzeigenschaften.

Das Dämpfen von Hölzern wird allgemein angewendet, um sie für nachfolgende Verarbeitungsschritte vorzubereiten. Beispielsweise wird das Schnittholz von Eichen oder Buchen in einer Dämpfkammer gedämpft, um vor einer Weiterverarbeitung die Farbe des Holzes zu verändern; die Dämpfungsbearbeitung wird in diesem Fall also zum Zwecke der Holzvergütung durchgeführt.

Bei der Dämpfung von Hölzern, beispielsweise bei der Dämpfung von Eichen- oder Buchen-Stammholz in einer Dämpfungskammer, fällt Dämpfungswasser an, das in der Regel in einem Sammelbehälter aufgefangen wird. Dieses Dämpfungswasser umfaßt das Kondensat des eingesetzten Wasserdampfes sowie Holz-Inhaltsstoffe, die durch diesen Wasserdampf aus dem Dämpfgut extrahiert wurden; der Wasserdampf wirkt also als Extraktionsmittel für diese Inhaltsstoffe.

Die chemische Zusammensetzung von Dämpfungswässern und die chemische Struktur der darin enthaltenen, extrahierten Holz-Inhaltsstoffe ist derzeit noch nicht ausreichend bekannt, was vor allem daran liegt, daß die präparative Abtrennung und Isolierung der extrahierten Holz-Inhaltsstoffe, bei denen es sich überwiegend um natürliche organische Polymere handelt, extrem aufwendig und schwierig ist.

Bekannt ist jedoch, daß typische Dämpfungswässer der buchen- und eichenholzverarbeitenden industrie einen niedrigen pH-Wert von ca. 4,2 - 5,0 besitzen; und deshalb wurden diese Dämpfungswässer bislang auch als problematische Abfallprodukte angesehen, die ohne vorherige Neutralisation nicht entsorgt werden durften. Darüber hinaus haben die genannten Dämpfungswässer einen hohen chemischen Sauerstoffbedarf (CSB), was die Behandlung in der Kläranlage aufwendig und teuer macht.

Der Erfindung lag die Aufgabe zugrunde, einen Weg zu finden, die beträchtlichen Kosten für die Entsorgung von Dämpfungswäsern, insbesondere solchen der buchen- und eichenholzverarbeitenden Industrie, einzusparen oder zumindest zu verringern.

Diese Aufgabe wird erfindungsgemäß durch die Verwendung von Dämpfungswasser (oder einer Dämpfungswasser-Fraktion) als Mittel zur Verminderung oder Verhinderung des Algenwachstums gelöst.

Die Erfindung beruht auf der überraschenden Erkenntnis, das Dämpfungswasser, insbesondere ein bei der Dämpfung von Eichen- oder Buchen-Stammholz in einer Dämpfungskammer anfallendes Dämpfungswasser,

(a) eine toxische Wirkung auf Algen hat und
(b) die Ausflockung und Ausfällung von Algensuspensionen fördert oder unterstützt.

Gemäß einem ersten Aspekt der Erfindung und entsprechend der bei (a) angegebenen überraschenden Wirkung von Dämpfungswasser wird dieses (oder eine Dämpfungswasser-Fraktion) daher als algentoxisches Mittel (Algizid) eingesetzt.

Gemäß einem zweiten Aspekt der Erfindung und entsprechend der bei (b) angegebenen überraschenden Wirkung von Dämpfungswasser wird dieses (oder eine Dämpfungswasser-Fraktion) als Mittel zur Fällung oder Ausflockung von in wässrigem Medium schwebenden Algen, Trübstoffen und/oder Bakterien eingesetzt.

In der Praxis treten aber beide Verwendungsarten und Wirkungsweisen häufig parallel nebeneinander auf.

Statt Dämpfungswasser also wie einen problematischen Abfall kostspielig zu entsorgen, wird es gezielt bei der Bekämpfung von Algen eingesetzt. Der ehemalige problematische Abfallstoff Dämpfungswasser hat sich im Rahmen der Erfindung überraschend als ein biologisch hochaktiver natürlicher Stoff erwiesen, der zugleich - aber hinsichtlich des Wirkmechanismus klar unterscheidbar - eine hervorragende chemisch-physikalische Wirkung als Flockungs(hilfs)mittel hat.

Was die biologische Aktivität angeht, ist in Dämpfungswässern nach dem bisherigen Kenntnisstand ein äußerst wirksamer bioaktiver Inhaltsstoff vorhanden, der bereits in geringen Konzentrationen die Zeilvermehrung z.B. folgender planktischer Mikroalgen hemmt: *Chlorella vulgaris, Dunaliella tertiolecta, Monoraphidium minutum, Scenedesmus subspicatus, Cyclotella cryptica* und *Blaualgen (Anabaena flos-aquae)*.

Hinsichtlich der Wirkung als Flockungs(hilfs)mittel haben eigene Untersuchungen zum Absetzverhalten von Algensuspensionen gezeigt, daß Dämpfungswässer zu einer beschleunigten Sedimentation von Algenzellen beitragen und dabei in ihrer Wirkung nicht hinter Eisenchlorid zurückstehen, das in der Abwassertechnik im technischen Maßstab als Flockungs(hilfs)mittel eingesetzt wird. Diese Eigenschaft ist von besonderer Bedeutung, da das Absinken der Algen zu einer Klärung der Wasserphase von Teichen beiträgt. Die Ausflockung und Sedimentation der Algenzellen führt überdies zu einer Reduzierung der Algen-Photosyntheseleistung.

Die Verwendung von Dämpfungswasser als Mittel zur Verminderung oder Verhinderung des Algenwachstums bringt aus ökologischer Sicht einige wesentliche Vorteile mit sich, die über den Wegfall des oben genannten Entsorgungsproblems noch hinausgehen.

So hat Dämpfungswasser nicht nur eine hervorragende Anti-Algen-Wirkung, sondern es wirkt im Unterschied zu den üblichen synthetischen Algiziden auch sehr spezifisch, d.h. ohne andere Organismengruppen (*non target*-Organismen) wie Fische, Wasserinsekten oder Zooplankton in unerwünschter Weise zu beeinträchtigen.

Zudem ist es - wiederum im Unterschied zu den üblichen synthetischen Algiziden - vollständig biologisch abbaubar; nach eigenen Untersuchungen in Studien zur Prüfung auf biologische Abbaubarkeit im Zahn-Wellens-Test nach OECD-Guideline 302 B war der biologische Abbau bereits nach 10 Tagen abgeschlossen (> 90 % DOC-Abbau).

Die Verwendung von Dämpfungswasser als Mittel zur Verminderung oder Verhinderung des Algenwachstums kann daher dazu beitragen, den Einsatz synthetischer, persistenter Algizide drastisch zu reduzieren.

In vielen Fällen ist es vorteilhaft, zur Verminderung oder Verhinderung des Algenwachstums ein Dämpfungswasser (oder eine Fraktion eines Dämpfungswassers) einzusetzen, das während der ersten acht, vorzugsweise während der ersten vier Stunden einer Dämpfungsbehandlung angefallen ist. Es hat sich nämlich gezeigt, daß die im Holz enthaltenen algentoxischen Substanzen in diesen ersten Stunden eines Dämpfungsvorgangs in besonders großen Mengen an den Wasserdampf abgegeben werden. Das Dämpfungswasser, das zu einem späteren Zeitpunkt der Dämpfungsbehandlung anfällt, hat deshalb häufig (aber nicht immer) eine verringerte Wirksamkeit im Vergleich mit dem zu einem frühen Zeitpunkt angefallenen Dämpfungswasser.

Dämpfungswasser kann direkt, so wie es in einem holzverarbeitenden Betrieb anfällt, als Mittel zur Verminderung oder Verhinderung des Algenwachstum eingesetzt werden. Es liegt aber auf der Hand, daß es in manchen Fällen vorteilhaft sein kann, ein (Roh-)Dämpfungswasser (beispielsweise ein Dämpfungswasser, das während der ersten acht, vorzugsweise während der ersten vier Stunden einer Dämpfungsbehandlung angefallen ist) vor dem Anti-Algen-Einsatz einer oder mehreren Behandlungsstufen zu unterziehen, insbesondere um ein Mittel zur Verminderung oder Verhinderung des Algenwachstums mit einer gegenüber dem eingesetzten (Roh-)Dämpfungswasser erhöhten Konzentration aktiver Inhaltsstoffe zu erlangen. Bei diesem Mittel kann es sich insbesondere um einen beispielsweise pulverförmigen Feststoff handeln.

Dem Fachmann auf dem Gebiet der Stofftrennung und der Reinigung wässriger Lösungen stehen eine Vielzahl von Verfahren zur Verfügung, unter denen er das für das jeweilige Dämpfungswasser geeignete (Ab-)Trenn- oder Anreicherungsverfahren auswählen kann. In Frage kommen insbesondere die Verfahren der Destillation (mit ihren verschiedenen Variationen), der Membran-Ultra- oder -Nanofiltration, der Extraktion (flüssig/flüssig oder unter Einsatz überkritischer Gase), der Umkehr-Osmose und der Dialyse, Flockungs-, Flotations- und Fällungsverfahren (z.B. mit Fe- und Al-Salzen), das Verfahren der Gefriertrocknung (zur Herstellung eines Feststoffs; siehe dazu unten Beispiel 5) sowie Kombinationen der vorgenannten Verfahren untereinander oder mit weiteren, hier nicht aufgezählten Verfahren.

Erste iJntersuchungen zur Verfahrensführung haben gezeigt, daß insbesondere eine Filtration im Cross-Flow-Verfahren dazu geeignet ist, die organischen Bestandteile von Dämpfungswässern gezielt anzureichern.

Das Verfahren der Gefriertrocknung ist besonders gut geeignet, um aus einem (gegebenenfalls bereits eingeengten) Dämpfungswasser die gelösten Feststoffe abzutrennen. Es hat sich gezeigt, daß im Wege der Gefriertrocknung aus Dämpfungswasser hergestellte Pulver hervorragende Mittel zur Verhinderung oder Verminderung des Algenwachstums sind.

Die Wirksamkeit einer jeweiligen Dämpfungswasser-Fraktion (inklusive Feststoff-Fraktionen, die sich mittels physikalischer Trennverfahren aus Dämpfungswasser gewinnen lassen) gegenüber Algen kann der Fachmann empirisch ermitteln, z.B. anhand eines Algenzellvermehrungs-Hemmtests oder eines Tests zum Absetzverhalten von Algensuspensionen. Er ist daher auch ohne genaue Kenntnis der Dämpfungswasser-Zusammensetzung in der Lage, Dämpfungswasser-Fraktionen (fest oder flüssig) abzutrennen, die eine gegenüber dem industriell anfallenden Roh-Dämpfungswasser verbesserte Anti-Algen-Wirkung besitzen.

Dementsprechend betrifft die Erfindung auch ein

Verfahren zur Herstellung eines Mittels zur Verminderung oder Verhinderung des Algenwachstums, in dem ein (Roh-)Dämpfungswasser durch Abtrennen von Wasser und/oder inaktiven Inhaltsstoffen (z.B. Salzen) eingeengt wird,

sowie ein

Mittel zur Verminderung oder Verhinderung des Algenwachstums, das aus einem (Roh-)Dämpfungswasser durch Abtrennen von Wasser und/oder inaktiven Inhaltsstoffen erhältlich ist; ein solches Mittel ist ein hinsichtlich der aktiven Inhaltsstoffe aufkonzentriertes (eingeengtes) Dämpfungswasser oder ein aus dem Dämpfungswasser durch Abtrennen flüssiger Bestandteile abgetrennter Feststoff.

Und die Erfindung betrifft zudem ein

Verfahren zur Herstellung eines Mittels zur Verminderung oder Verhinderung des Algenwachstums, in dem aus einem Dämpfungswasser eine (feste oder flüssige) Fraktion abgetrennt wird, die eine gegenüber dem der Abtrennung unterzogenen (Roh-) Dämpfungswasser erhöhte Wirkung als Mittel zur Verminderung oder Verhinderung des Algenwachstums besitzt,

sowie ein

Mittel zur Verminderung oder Verhinderung des Algenwachstums, das erhältlich ist, indem man aus einem (Roh-) Dämpfungswasser eine Fraktion (fest oder flüssig) abtrennt, die eine gegenüber dem der Abtrennung unterzogenen Dämpfungswasser erhöhte Wirkung als Mittel zur Verminderung oder Verhinderung des Algenwachstums besitzt. Auch bei einem solchen Mittel handelt es sich um ein aufkonzentriertes Dämpfungswasser oder einen aus dem Dämpfungswasser durch Abtrennen flüssiger Bestandteile abgetrennten Feststoff.

Als besonders wirksame Mittel zur Verminderung oder Verhinderung des Algenwachstums haben sich wässrige Dämpfungswasser-Fraktionen erwiesen, die - bezogen auf den Anteil organischer Substanz in einem unbehandelten (Roh-) Dämpfungswasser - einen erhöhten Anteil makromolekularer Substanz mit einer durchschnittlichen molaren Masse $M_R$ von ca. 2000 - 10000 g/mol umfassen. Augenscheinlich besitzen die organischen Inhaltsstoffe des Dämpfungswassers mit einem $M_R$ im genannten Bereich eine besonders hohe biologische und/oder chemisch-physikalische Aktivität. Die genannten Fraktionen lassen sich auch in wasserfreier Form (z.B. nach Gefriertrocknung) hervorragend einsetzen.

Die Erfindung betrifft schließlich auch die Verwendung einer wässrigen Extraktionslösung, die bei der Fest-Flüssig-Extraktion von Gehölz-Inhaltsstoffen aus Gehölz mit einem wässrigen Extraktionsmittel gewonnen wird, als Mittel zur Verminderung oder Verhinderung des Algenwachstums.

Bevorzugt ist hierbei die Verwendung einer wässrigen Extraktionslösung, die bei der Fest-Flüssig-Extraktion oder dem Auslaugen von Gehölz-Inhaltsstoffen aus Gehölz mit einem wässrigen Extraktionsmittel bei einer Temperatur zwischen 50 °C und 85 °C gewonnen wird. Aus dieser Extraktionslösung kann auch ein getrocknetes hochwirksames Produkt erhalten werden (z.B. durch Gefriertrocknung).

Weiter bevorzugt ist die Verwendung einer wässrigen Extraktionslösung, die bei der Fest-Flüssig-Extraktion oder dem Auskochen von Gehölz-Inhaltsstoffen aus Gehölz mit einem wässrigen Extraktionsmittel bei einer Temperatur oberhalb von 85 °C gewonnen wird. Auch aus dieser Extraktionslösung kann ein getrocknetes hochwirksames Produkt erhalten werden (z.B. durch Gefriertrocknung).

Vorzugsweise umfaßt das zu extrahierende Gehölz Baumrinde oder Stammholz.

Die Einsatzgebiete der erfindungsgemäßen Mittel zur Verminderung oder Verhinderung des Algenwachstums finden sich überall dort, wo Algen ein Problem darstellen. Ein primäres Einsatzgebiet sind private und öffentliche Zierteiche sowie Nutzteiche der Fischwirtschaft, daneben ist aber auch ein Einsatz der erfindungsgemäßen Mittel in offenen Kühlwasser- und Produktionswasserkreisläufen (z.B. von Kraftwerken) sowie in Trinkwasserreservoiren und in Speicherbecken zur Trinkwassergewinnung sinnvoll.

Nachfolgend wird die Erfindung anhand von Ausführungsbeispielen näher erläutert.

Beispiel 1: Dämpfen von Buchenholz

Waldfrisches Buchen-Rundholz wird eingeschnitten und unverzüglich in einem dicht schließenden, wärmeisolierten Aluminiumgebäude eingelagert, das als Dämpfkammer dient. Der Holzinhalt nach Einlagerung beträgt bis zu 50 m$^3$. Das Holz ruht im Aluminiumgebäude - mit oder ohne Zwischenlatten - in Paketen von 2-5 m Länge mit einer Paketbreite und -höhe von jeweils ca. 1 m. Das Aluminiumgebäude wird verschlossen.

In einer ersten Phase (Anheizphase) wird über einen Zeitraum von 8 h unter ständiger Zugabe von Wasserdampf die Innentemperatur im Aluminiumgebäude auf 75° C erhöht. Eine Dämpfung des Buchenholzes findet dabei kaum statt.

Anschließend wird das Buchenholz in einer zweiten Phase (Dämpfungsphase) unter weiterer Zugabe von Wasserdampf bei einer gleichbleibenden Temperatur von 75°C gedämpft.

Das Schnittholz verfärbt sich dabei im Zeitraum zwischen 12 und 45 h von hellrosa nach dunkel-rötlich-braun.

In diesem Zeitraum fällt Dämpfungswasser an, welches zunächst sehr heiß in einem Sammelbehälter aufgefangen und später abgekühlt wird.

Das Dämpfungswasser besteht im wesentlichen aus dem Kondensat des eingesetzten Wasserdampfs, und es umfaßt aus dem Buchenholz extrahierte Inhaltsstoffe, die das Dämpfungswasser rötlich-braun färben.

Beispiel 2: Algizide Wirkung von Dämpfungswässern aus der Dämpfung von Buchenholz / Abhängigkeit der Toxizität von der Dämpfungsdauer / Abhängigkeit des DOC von der Dämpfungsdauer

Bei der Dämpfung von Buchenholz gemäß Beispiel 1 wurden in zeitlicher Aufeinanderfolge über Zeiträume von vier bzw. (einmalig) drei Stunden hinweg insgesamt neun Dämpfungswasser-Proben gesammelt.

Anhand dieser Proben sollte das Extraktionsverhalten des Wasserdampfes in Abhängigkeit von der Zeit ermittelt und festgestellt werden, ob zu einer bestimmten Zeit innerhalb des Dämpfungsvorganges besonders wertvolle (d.h. das Algenwachstum besonders stark hemmende) Dämpfungswasser-Fraktionen erhalten werden können.

1. Die einzelnen Dämpfungswasser-Proben wurden deshalb zunächst jeweils einem Algenzellvermehrungs-Hemmtest nach DIN 38 412, Teil 33 unterzogen.

In diesem Test wurde die Zellvermehrung unter den Versuchsbedingungen mit und ohne Einwirkung des Testguts (Buchenholz-Dämpfungswasser in den Verdünnungsstufen 1:10 und 1:100) verglichen. Aus diesem Vergleich ergibt sich die Hemmwirkung $H_F$ als Maß für die Toxizität des Testguts.

Nach jeweils 72-stündiger Exposition der Testalgen in den Mischungen (mit und ohne Dämpfungswasser als Testgut) wurde zu einer jeweiligen Verdünnungsstufe die Hemmwirkung bestimmt, und zwar durch Vergleich der Algenbiomasseproduktion der Testalgen unter Einwirkung des Testguts mit der Produktion in einer Mischung, die kein Testgut enthielt.

Als Maß für die Algenbiomasse gilt dabei die in-vivo bei Licht mit einer Wellenlänge von 685 nm gemessene Chlorophyll-Fluoreszenz nach Anregung mit Licht im Wellenlängenbereich von 400 nm bis 500 nm (Maxima bei 435 nm und 485 nm).

Es gilt:

$$H_F = \frac{F_K - F_G}{F_K} \times 100$$

mit

$H_F$ = Hemmwirkung auf die Biomasseproduktion in %, ausgedrückt als Minderug der Chlorophyll-Fluoreszenz
$F_K$ = gemessene Chlorophyll-Fluoreszenz im Kontrollansatz
$F_G$ = gemessene Chlorophyll-Fluoreszenz im Testansatz

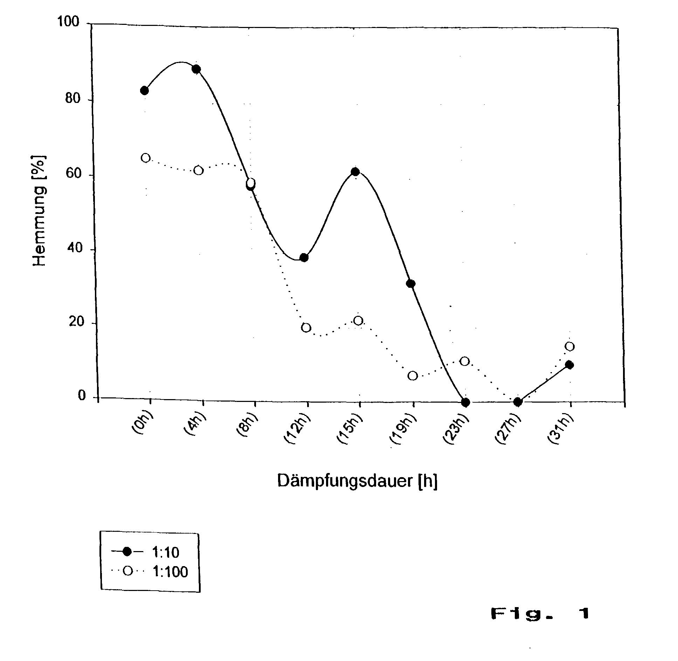

Für die untersuchten Dämpfungswasser-Proben aus der Dämpfung von Buchenholz gemäß Beispiel 1 ergab sich das in der beigefügten Fig.1 zusammengefaßte Versuchsergebnis.

Mit zunehmender Dämpfungsdauer war also eine abnehmende algizide Wirkung der entsprechenden Dämpfungswasser-Proben festzustellen. Als besonders algentoxisch haben sich Buchen-Dämpfungswässer erwiesen, die innerhalb der ersten 8, vorzugsweise innerhalb der ersten 4 Stunden eines Dämpfungsvorganges entnommen wurden.

Augenscheinlich gibt das dampfbehandelte Buchen-Schnittholz die algentoxischen, überwiegend organischen Substanzen also in den ersten Stunden eines Dämpfungsvorgangs in besonders großen Mengen ab.

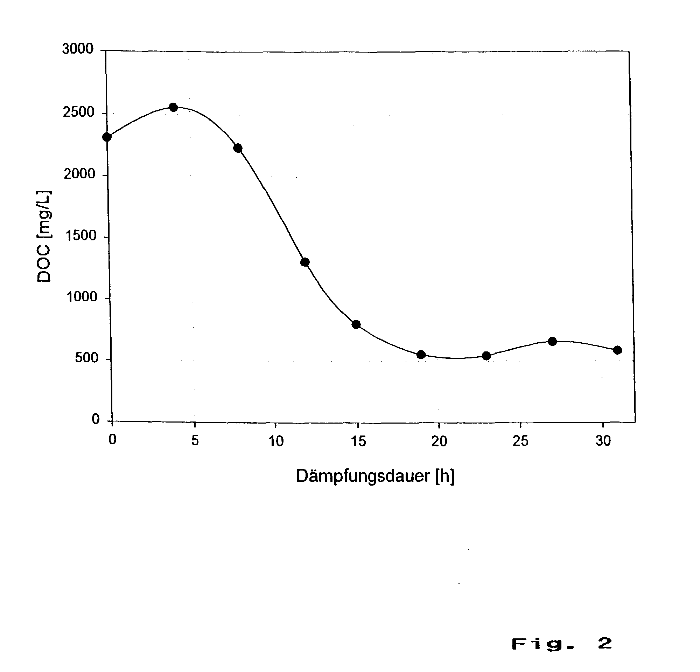

2. Bestätigt wurde dies durch eine Bestimmung des DOC-Werts (DOC = dissolved organic carbon, d.h. gelöster organischer Kohlenstoff) der im Hemmtest eingesetzten Dämpfungswasser-Proben gemäß DIN 38409 H 3. Hierfür ergab sich das in der beigefügten Fig. 2 zusammengefaßte Analyseergebnis.

Aus einem Vergleich der Figuren 1 und 2 ergibt sich, daß die besonders toxisch wirkenden Dämpfungswasser-Proben einen besonders hohen DOC-Wert besaßen.

Beispiel 3: Einfluß von Dämpfungswasser auf das Absetzverhalten von einzelligen Grünalgen-Suspensionen (Scenedesmus subspicatus)

Ein verdünntes Dämpfungswasser aus der Dämpfung von Buchenholz gemäß Beispiel 1 wurde einem Test zum Absetzverhalten von einzelligen Grünalgen-Suspensionen unterzogen. Durch diesen Test sollte belegt werden, daß Dämpfungswässer als Mittel zur Fällung oder Ausflockung insbesondere von in wässrigem Medium schwebenden Algen besonders geeignet sind.

In dem Absetztest wurde das Absetzverhalten von $1 \times 10^6$ Algenzellen/ml der einzelligen Grünalgenart *Scenedesmus subspicatus* geprüft, und zwar parallel in jeweils einem Liter

    (a) eines durch Zugabe von 10 Volumenteilen Leitungswasser verdünnten Dämpfungswassers gemäß Beispiel 1,
    (b) eines Leitungswassers ohne Dämpfungswasser-Anteil (Kontrollversuch) und
    (c) eines mit dem Referenz-Flockungsmittel Eisen(III)-chlorid $FeCl_3$ in einer Konzentration von 10 mmol/l versetzten Leitungswassers.

Das Absetzverhalten wurde dabei jeweils unter Verwendung von Imhoff-Trichtern (d.h. kegelförmigen Sedimentiergefäßen mit einem Nennvolumen von 1000 ml, die zur Bestimmung des Volumens absetzbarer Stoffe in Wasserproben dienen) untersucht. Das Untersuchungsprinzip entspricht dem Prinzip abwasseranalytischer Untersuchungen zur Bestimmung des Absetzverhaltens von Schlamm etc. gemäß DIN 38409 H 9-1.

Eisenchlorid findet in der Abwassertechnik im technischen Maßstab als Flockungsmittel Anwendung und ist insoweit als Referenzsubstanz besonders geeignet.

Es ergab sich das in der nachfolgenden Tabelle 1 zusammengefaßte Versuchsergebnis für die Ansätze (a), (b) und (c).

Tab. 1:

| Absetzverhalten von Algensuspensionen | | | |
|---|---|---|---|
| Absetzverhalten Ansatz | | | |
| Zeit [h] | a | b | c |
| 0 | homogen | homogen | homogen |
| 4 | Flockenbildung, kein Sediment | ansatzweise Flockenbildung | 1 ml Sediment |
| 24 | 1,5 ml Sediment | keine Sedimentation; homogen | 1,5 ml Sediment |

Während des Tests wurde bei dem erfindungsgemäßen Testansatz (a) nach 6 Stunden die Ablagerung von Algenzellen in Form kleiner Pellets an den seitlichen Wandungen des zugehörigen Imhoff-Trichters beobachtet. Der Durchmesser der Pellets betrug etwa 1-2 mm. In den folgenden Stunden wurde eine zunehmende Sedimentbildung beobachtet, die nach ca. 24 Stunden im wesentlichen abgeschlossen war.

Das Referenz-Flockungsmittel Eisenchlorid (Ansatz (c)) führte zu vergleichbaren Ergebnissen, allerdings war (bei der angegebenen Konzentration des Eisenchlorids) hier bereits nach 4 Stunden eine Sedimentation zu beobachten. Es ist aber klar, daß bei einem vergleichsweise konzentrierten Dämpfungswasser- oder Eisenchlorid-Testansatz die Sedimentation früher einsetzen wird, als bei einem vergleichsweise niedriger konzentrierten. Insoweit zeigt der durchgeführte Test nur die generelle Eignung von Dämpfungswasser als Sedimentationsbeschleuniger; ein quantitativer Vergleich mit dem Referenz-Flockungsmittel Eisenchlorid ist anhand des Testresultats nicht möglich.

Beispiel 4: Zusammenhang zwischen Dämpfungsbedingungen und Algentoxizität

Um zu ermitteln, ob die Dicke von Buchen-Schnittholz unter ansonsten gleichen oder ähnlichen Dämpfungsbedingungen (Dämpfungstemperatur, Dämpfungsdauer, Holzmenge etc.) einen Einfluß auf die Qualität des Dämpfungswassers hat, wurden für Buchen-Schnittholz unterschiedlicher Dicke

- analog Beispiel 1 Dämpfungsbehandlungen mit einer Dämpfungsdauer von 12 - 24 Stunden durchgeführt und
- analog Beispiel 2 die algentoxische Wirkung des jeweils gewonnenen Dämpfungswassers untersucht.

Es wurde festgestellt, daß ein Dämpfungswasser aus der Dämpfung von Schnittholz mit einer vergleichsweise geringen Holzstärke von 26-38 mm eine deutlich höhere Toxizität besaß als ein Dämpfungswasser aus der Dämpfung von Schnittholz mit einer vergleichsweise großen Holzstärke von ca. 52 mm.

Dieser Unterschied ist wahrscheinlich darauf zurückzuführen, daß bei der Dämpfung des Schnittholzes mit der geringeren Holzstärke (bei gleicher Gesamt-Holzmenge wie bei dem Schnittholz mit der größeren Holzstärke) insgesamt eine größere Holzoberfläche exponiert war. Durch das vergleichsweise große Oberflächen-Angebot konnten hier augenscheinlich größere Mengen an extrahierbaren Substanzen in den Wasserdampf übergehen als bei dem vergleichsweise kleinen Oberflächen-Angebot bei der Dämpfung des Schnittholzes mit der größeren Holzstärke. Und größere Mengen extrahierter Substanz besitzen zumindest unter ansonsten gleichen Dämpfungsbedingungen die größere toxische Wirkung.

Beispiel 5: Gefriertrocknung von Dämpfungswasser / Herstellung eines im festen Aggregatzustand vorliegenden Mittels zur Verminderung oder Verhinderung von Algenwachstum

Ein Dämpfungswasser aus der Dämpfung von Buchenholz gemäß Beispiel 1, das innerhalb der ersten vier bis sechs Stunden nach Dämpfungsbeginn gewonnen wurde, wurde einer Gefriertrocknung (Lyophilisation) unterzogen.

Es wurde dabei eine Zwei-Kammer-Anlage der Firma M. Christ mit der Typenbezeichnung Eps. 2-65 DS eingesetzt.

Die Trocknungsdauer betrug 72 Stunden, und es wurde ein Gasdruck von 0,1 hPa (mbar) eingestellt.

Das Dämpfungswasser wurde bei einer Einfriertemperatur von - 40 °C eingefroren.

Die Stellflächentemperatur wurde zwischen - 20 °C und + 20 °C variiert.

Durch die Gefriertrocknung ergab sich ein festes Produkt mit einer Schichthöhe von etwa 12 mm, das sich in Versuchen als hervorragendes Mittel zur Verminderung oder Verhinderung des Algenwachstums bewährt hat. So wurde bei einer Rücklösung des gefriergetrockneten Materials in einer Verdünnung von 1:100000 eine Hemmung ($H_F$) der Algenzelivermehrung von 80 % nachgewiesen, analog zum Beispiel 2.

Anmerkung: Vor dem Einsatz bei der Algenbekämpfung kann ein im Wege der Gefriertrocknung erhaltenes festes Produkt ganz allgemein in Wasser rückgelöst oder aufgeschlämmt werden.

**Patentansprüche**

1. Verwendung von Dämpfungswasser oder einer Dämpfungswasser-Fraktion als Mittel zur Verminderung oder Verhinderung des Algenwachstums.

2. Verwendung von Dämpfungswasser oder einer Dämpfungswasser-Fraktion als Algizid.

3. Verwendung von Dämpfungswasser oder einer Dämpfungswasser-Fraktion als Mittel zur Fällung oder Ausflockung von in wässrigem Medium schwebenden Algen, Trübstoffen und/oder Bakterien.

4. Verfahren zur Herstellung eines Mittels zur Verminderung oder Verhinderung des Algenwachstums, dadurch gekennzeichnet, daß ein Dämpfungswasser durch Abtrennen von Wasser und/oder inaktiven Inhaltsstoffen eingeengt wird.

5. Festes oder flüssiges Mittel zur Verminderung oder Verhinderung des Algenwachstums, dadurch gekennzeichnet, daß es aus einem Dämpfungswasser durch Abtrennen von Wasser und/oder inaktiven Inhaltsstoffen erhältlich ist.

6. Verfahren zur Herstellung eines Mittels zur Verminderung oder Verhinderung des Algenwachstums, dadurch gekennzeichnet, daß aus einem Dämpfungswasser eine Fraktion abgetrennt wird, die eine gegenüber dem der Abtrennung unterzogenen Dämpfungswasser erhöhte Wirkung als Mittel zur Verminderung oder Verhinderung des Algenwachstums besitzt.

7. Mittel zur Verminderung oder Verhinderung des Algenwachstums, dadurch gekennzeichnet, daß es erhältlich ist, indem man aus einem Dämpfungswasser eine Fraktion abtrennt, die eine gegenüber dem der Abtrennung unterzogenen Dämpfungswasser erhöhte Wirkung als Mittel zur Verminderung oder Verhinderung des Algenwachstums besitzt.

8. Verwendung einer wässrigen Extraktionslösung, die bei der Fest-Flüssig-Extraktion von Gehölz-Inhaltsstoffen aus Gehölz mit einem wässrigen Extraktionsmittel gewonnen wird, als Mittel zur Verminderung oder Verhinderung des Algenwachstums.

9. Verwendung einer wässrigen Extraktionslösung, die bei der Fest-Flüssig-Extraktion oder dem Auslaugen von Gehölz-Inhaltsstoffen aus Gehölz mit einem wässrigen Extraktionsmittel bei einer Temperatur zwischen 50 °C und 85 °C gewonnen wird, als Mittel zur Verminderung oder Verhinderung des Algenwachstums.

10. Verwendung einer wässrigen Extraktionslösung, die bei der Fest-Flüssig-Extraktion oder dem Auskochen von Gehölz-Inhaltsstoffen aus Gehölz mit einem wässrigen Extraktionsmittel bei einer Temperatur oberhalb von 85 °C gewonnen wird, als Mittel zur Verminderung oder Verhinderung des Algenwachstums.

11. Verwendung einer wässrigen Extraktionslösung nach einem der Ansprüche 8 bis 10 als Mittel zur Verminderung oder Verhinderung des Algenwachstums, dadurch gekennzeichnet, daß das Gehölz Baumrinde und/oder Stammholz umfaßt.

Fig. 1

Fig. 2

**Europäisches Patentamt**

**EUROPÄISCHER RECHERCHENBERICHT**

Nummer der Anmeldung

EP 99 20 2340

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 2 112 286 A (CIBA GEIGY) 20. Juli 1983 (1983-07-20) * Seite 1, Zeile 33 - Seite 2, Zeile 25 * * Ansprüche 1,2,6,7,9,10,20 * | 1-11 | A01N65/00 |
| X | EP 0 410 319 A (TADEKA GARDEN PRODUCTS) 30. Januar 1991 (1991-01-30) * see the whole document* | 1-11 | |
| A | CHEMICAL ABSTRACTS, vol. 124, no. 11, 11. März 1996 (1996-03-11) Columbus, Ohio, US; abstract no. 138214, TAYLOR, BARRY R. ET AL: "Toxicity of aspen wood leachate to aquatic life: laboratory studies" XP002119721 * Zusammenfassung * & ENVIRON. TOXICOL. CHEM. (1996), 15(2), 150-9 , | | |
| A | DE 297 03 424 U (BELL SELL MODERNISIERUNG GMBH) 24. April 1997 (1997-04-24) * Anspruch 1 * | | RECHERCHIERTE SACHGEBIETE (Int.Cl.7) A01N |

Der vorliegende Recherchenbericht wurde für alle Patentansprüche erstellt

| Recherchenort | Abschlußdatum der Recherche | Prüfer |
|---|---|---|
| DEN HAAG | 21. Oktober 1999 | Fort, M |

**ANHANG ZUM EUROPÄISCHEN RECHERCHENBERICHT
ÜBER DIE EUROPÄISCHE PATENTANMELDUNG NR.**       EP 99 20 2340

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-1999

| Im Recherchenbericht angeführtes Patentdokument | Datum der Veröffentlichung | Mitglied(er) der Patentfamilie | Datum der Veröffentlichung |
|---|---|---|---|
| GB 2112286 A | 20-07-1983 | KEINE | |
| EP 0410319 A | 30-01-1991 | AT 107133 T | 15-07-1994 |
| | | CA 2021780 A | 25-01-1991 |
| | | DE 69009885 D | 21-07-1994 |
| | | DE 69009885 T | 01-12-1994 |
| | | DK 410319 T | 24-10-1994 |
| | | JP 2879465 B | 05-04-1999 |
| | | JP 3135905 A | 10-06-1991 |
| | | US 5149534 A | 22-09-1992 |
| | | US 5298241 A | 29-03-1994 |
| DE 29703424 U | 24-04-1997 | KEINE | |

EPO FORM P0461

Für nähere Einzelheiten zu diesem Anhang : siehe Amtsblatt des Europäischen Patentamts, Nr.12/82